# EUROPEAN PATENT APPLICATION

(11) **EP 1 411 589 A2**
(43) Date of publication of application: **21.04.2004**
(21) Application number: 03023689.7
(22) Date of filing: 17.10.2003
(51) Int. Cl.: H01Q 21/06, H01Q 21/00, H01Q 1/32, H01Q 23/00

(54) **High-frequency transceiver apparatus and method of manufacturing the same**

(30) Priority: 18.10.2002 JP 2002303897
(71) Applicant: Hitachi Ltd., Tokyo (JP); Hitachi Car Engineering Co., Ltd., Hitachinaka-shi, Ibaraki-ken (JP)
(72) Inventor: Koshizawa, Atsushi, Hitachinaka-shi Ibaraki-Ken, 312-0062 (JP); Kawahara, Keiji, 5-1 Marunouchi 1-chome Chiyoda-ku Tokyo (JP); Matsuura, Kazuo, 5-1 Marunouchi 1-chome Chiyoda-ku Tokyo (JP)
(74) Representative: Beetz & Partner Patentanwälte

(57) **Abstract**

In a high-frequency transceiver apparatus (100) wherein an antenna substrate (2) made of a dielectric material and having an antenna conductor pattern (7) formed thereon is bonded onto one surface of a base plate (1) to transmit and receive a high frequency wave signal, the flatness accuracy of the surface of the antenna substrate (2) is set at λ/20 or less when λ denotes effective wavelength.

## Description

### BACKGROUND OF THE INVENTION

The present invention relates to high-frequency transceiver apparatuses including a patch antenna array board and more particular, to a car-mounted, high-frequency transceiver apparatus (generally known as a millimeter wave radar) for a headway distance alarm system for detecting a distance between two successive vehicles based on adaptive cruise control (ACC).

In a high-frequency transceiver apparatus provided with a patch antenna as disclosed as a prior art in JP-A-11-122136 (page 2, Fig. 2), an upper lid is previously provided with a cut hole for mounting the patch antenna thereon, so that a board having the patch antenna mounted thereon is bonded onto the cut hole.

In JP-A-11-122136, the board having the patch antenna is bonded onto the upper lid, but the cut hole is made in the upper lid. For this reason, when the antenna board is bonded to the upper lid, the antenna board is loosened in a cut hole direction at the cut hole made in the upper lid. Thus, when the board having the patch antenna mounted thereon is bonded onto the upper lid provided therein with the cut hold as shown in JP-A-11-122136, the loosing in the cut hole direction causes the flatness of the surface of the patch antenna element to be deteriorated.

In this way, when the flatness of the surface of the patch antenna element is bad, a problem takes place in the high-frequency transceiver apparatus for detecting the distance between cars, though no problem takes place in a transceiver apparatus designed for relatively low frequency. For example, since the high-frequency transceiver apparatus has an operating frequency of 76 or 77GHz and has a wavelength as short as about 4mm in a free space, a phase at a given point in a radial direction from each patch antenna varies largely with the antenna plane. This causes change of the directivity of electric field intensity determined by a combination of radiations of the patch antennas. For this reason, the electric field intensity in a specific direction in a detection range becomes small or the detection distance becomes short. Further, when the electric field intensity becomes strong in such a specific direction (unwanted direction) as functionally unnecessary for the detection, a wave signal reflected by the ground surface is detected in the form of noise for a specific-directional wave signal reflected thereby to be functionally detected. When such noise from the specific-directional reflected wave signal to be functionally detected is detected in this way, the transceiver apparatus becomes low in detection accuracy.

### SUMMARY OF THE INVENTION

It is therefore an object of the present invention to provide a high-frequency transceiver apparatus which can enhance a headway distance detection performance with a good productivity and a low price.

In accordance with an aspect of the present invention, there is provided a high-frequency transceiver apparatus wherein an antenna substrate made of a dielectric material and having an antenna conductor pattern formed thereon is bonded onto one surface of a base plate to transmit and receive a high frequency wave signal. In this case, the flatness accuracy of a surface of the antenna substrate is set at λ/20 or less when λ denotes effective wavelength.

And the base plate is formed by press processing.

With such an arrangement, the high-frequency transceiver apparatus can secure a high flatness accuracy for the patch antenna element, increase its performance, and obtain a long detection distance. Further, since the base plate is manufactured by pressing in the high-frequency transceiver apparatus, the apparatus can realize a low cost and an enhanced performance.

In accordance with another aspect of the present invention, there is provided a high-frequency transceiver apparatus to be mounted on a car, wherein an antenna substrate having an antenna conductor pattern formed thereon as connected with a plurality of patch antenna elements is bonded onto one surface of a base plate, a high-frequency circuit substrate including a circuit conductor pattern and a semiconductor chip connected to the circuit conductor pattern is provided on the other surface of the base plate, the antenna substrate and the high-frequency circuit substrate are integrally formed for transmission and reception, a projection is formed on the other surface of the base plate so as to surround the high-frequency circuit substrate, a cover having a radio wave absorber is mounted on an upper face of the projection, the high-frequency transceiver apparatus for transmitting and receiving a high frequency wave signal is used for the purpose of detecting a distance between cars, and a flatness accuracy of a surface of the antenna substrate of the high-frequency transceiver apparatus is set at λ/20 or less when λ denotes effective wavelength, and an effective frequency of the high-frequency transceiver apparatus is set at any frequency in a range from 76 to 77GHz.

And the base plate is formed by press processing.

With such an arrangement, the high-frequency transceiver apparatus for mounting on a vehicle can secure a high flatness accuracy for the patch antenna element, improve its performance, and obtain a long detection distance. Further, since the base plate is manufactured by pressing in the high-frequency transceiver apparatus, the apparatus can realize a low cost and an enhance performance. Further, since the base plate is manufactured by pressing in the high-frequency transceiver apparatus for mounting on a vehicle, the apparatus can realize a low cost and an enhanced performance.

Other objects, features and advantages of the invention will become apparent from the following description of the embodiments of the invention taken in conjunction with the accompanying drawings.

### BRIEF DESCRIPTION OF THE DRAWINGS

Fig. 1 is a vertical cross-sectional view of a high-frequency transceiver apparatus in accordance with the present invention;
Fig. 2 is a plan view of the high-frequency transceiver apparatus when viewed from its antenna side;
Fig. 3 is a graph showing a relationship between the flatness accuracy of a patch antenna element and the phase shift of high frequency radio wave signals;
Fig. 4 is a graph showing a relationship between the phase shift of high frequency radio wave signals and the attenuation of a combined power;
Fig. 5 is a graph showing the flatness accuracy of patch antenna elements and the phase shift of high frequency radio wave signals;
Fig. 6 shows an angle shift in a high frequency wave signal;
Figs. 7A to 7E respectively show steps of manufacturing an antenna mounting base in the present invention;
Fig. 8 is a cross-sectional view of a die for manufacturing the antenna mounting base in the present invention;
Fig. 9 is a cross-sectional view of a die for manufacturing an antenna mounting base in the present invention;
Fig. 10 is a cross-sectional view of a die for manufacturing an antenna mounting base in the present invention;
Fig. 11 is a cross-sectional view of a die for manufacturing an antenna mounting base in the present invention;
Fig. 12 is a perspective view of the antenna mounting base in the present invention;
Fig. 13 is a vertical cross-sectional view of another high-frequency transceiver apparatus in accordance with the present invention;
Fig. 14 is a vertical cross-sectional view of a further high-frequency transceiver apparatus in accordance with the present invention; and
Fig. 15 is a vertical cross-sectional view of yet another high-frequency transceiver apparatus in accordance with the present invention.

### DESCRIPTION OF THE EMBODIMENTS

A high-frequency transceiver apparatus according to the present invention is a millimeter wave radar which applies frequency modulation to a transmission signal of a continuous wave radar, receives a signal reflected from a target, and measures a distance from the target and a running. The millimeter wave radar is expected as an all-weather type sensor which can acquire an object to be measured stably even in a rain or mist condition. The millimeter wave radar radiates a wave signal from a transmitting antenna, receives a reflected wave signal from a vehicle target, and detects a distance from a target vehicle to be measured and a relative speed between the target vehicle and radar.

More specifically, the high-frequency transceiver apparatus applies frequency modulation to the transmission signal of the continuous wave radar, performs such operation repetitively by a suitable number of times, produces a beat signal from the received signals to obtain a beat frequency, and determines a distance as far as the target. When the high-frequency transceiver apparatus for car mounting is used as a radar or a distance detecting sensor used in a headway distance alarm apparatus or a headway distance automatic control ACC (adaptive cruise control) apparatus, when the target is moving, further, the transmission signal of the continuous wave radar strikes the forward moving object (preceding car) and is returned as a wave signal reflected thereby, with a relative speed difference therebetween. The frequency of the transmission signal itself and the frequency of the reflected signal are mixed to extract a Doppler frequency alone from the mixed signal, and the extracted signal is modulated to measure a distance from the preceding car.

The high-frequency transceiver apparatus according to the present invention is arranged so that an antenna substrate made of a dielectric material and having an antenna conductor pattern formed thereon is bonded onto one surface of a base plate to transmit and receive a high frequency wave signal, and the flatness accuracy of a surface of the antenna substrate is set at λ/20 or less when λ denotes effective wavelength.

In the present invention, further, a high-frequency dielectric circuit substrate forming a transmission/reception (transceiver) circuit is provided on the other surface of the base plate.

In the present invention, furthermore, the transceiver circuit includes a circuit conductor pattern formed on the surface of the high-frequency circuit substrate and a semiconductor chip connected to the circuit conductor pattern, and the antenna pattern conductors are arranged as connected with a plurality of patch antenna elements.

In the present invention, in addition, the antenna substrate is integrally formed with the high-frequency circuit substrate for transmission and reception.

Also, in the present invention, a cover having a function of absorbing electromagnetic waves is mounted on one surface of the base plate having the high-frequency circuit substrate mounted thereon.

A projection surrounding the periphery of the high-frequency circuit substrate is provided on the other surface of the base plate, and a cover having a radio wave absorber is provided on the upper face of the projection.

Further, in the present invention, an effective wavelength frequency is set at any frequency in a range from 76 to 77GHz.

In the present invention, the semiconductor chip is made of a compound of Ga and As, and the high-frequency circuit substrate is air-tightly sealed by mounting the cover thereon.

In the present invention, the base plate is formed by pressing.

In the present invention, the surface of the base plate having the antenna substrate bonded thereonto is annealed to remove distortion.

In the present invention, further, the base plate is manufactured by shaping a metallic plate blank into a plate having dimensions corresponding nearly to the outer periphery of the projection outside the projection, shaping the formed plate into a second plate having dimensions corresponding nearly to the inner periphery of the projection inside the projection, annealing the second plate to remove distortion, and then shaping the cover mounting face of the projection.

In the present invention, furthermore, a high-frequency transceiver apparatus to be mounted on a car is arranged so that an antenna substrate having an antenna conductor pattern formed thereon as connected with a plurality of patch antenna elements is bonded onto one surface of a base plate, a high-frequency circuit substrate including a circuit conductor pattern and a semiconductor chip connected to the circuit conductor pattern is provided on the other surface of the base plate, the antenna substrate and the high-frequency circuit substrate are integrally formed for transmission and reception, a projection is formed on the other surface of the base plate so as to surround the high-frequency circuit substrate, a cover having a radio wave absorber is mounted on an upper face of the projection, the high-frequency transceiver apparatus for transmitting and receiving a high frequency wave signal is used for the purpose of detecting a distance between cars, and a flatness accuracy of a surface of the antenna substrate of the high-frequency transceiver apparatus is set at λ/20 or less when λ denotes effective wavelength, and an effective frequency of the high-frequency transceiver apparatus is set at any frequency in a range from 76 to 77GHz.

In the present invention, further, the base plate is shaped by press processing.

The base plate is manufactured by shaping a metallic plate work into a plate having dimensions corresponding nearly to the outer periphery of the projection outside the projection, shaping the shaped plate into a second plate having dimensions corresponding nearly to the inner periphery of the projection inside the projection, annealing the second plate to remove distortion, and then shaping the cover mounting face of the projection.

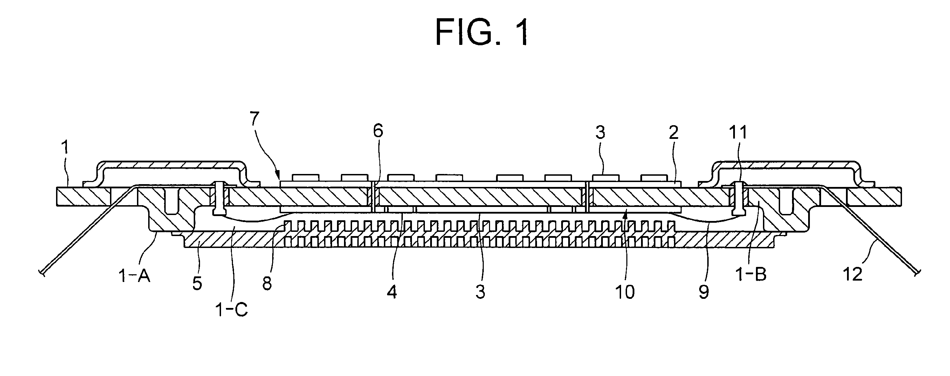

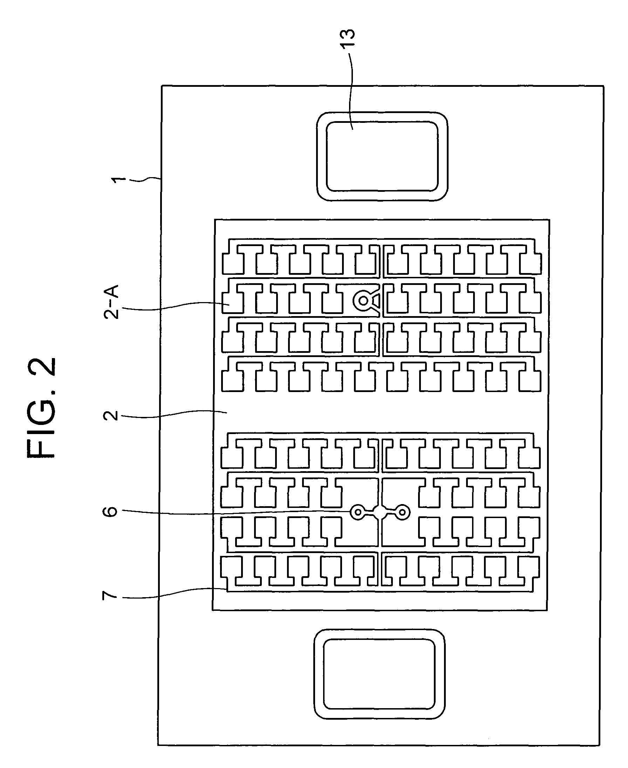

Figs. 1 and 2 show a first embodiment of a high-frequency transceiver apparatus in accordance with the present invention, wherein Fig. 1 is a cross-sectional view of the high-frequency transceiver apparatus and Fig. 2 is a plan view of the apparatus of Fig. 1.

In Figs. 1 and 2, reference numeral 100 denotes a high-frequency transceiver apparatus. The high-frequency transceiver apparatus 100 includes a metallic base 1 for antenna mounting in the form of a base plate. Mounted on the upper surface of the antenna mounting metallic base 1 as the base plate is a patch antenna array substrate 2 as an antenna substrate. And formed on the upper surface of the patch antenna array substrate (antenna substrate) 2 are antenna conductor patterns 7, which in turn are connected to a plurality of patch antenna elements 2-A.

Also bonded onto the lower surface of the antenna mounting base (base plate) 1 are a high-frequency circuit substrate 3 made of dielectric material integrally formed with the transceiver circuit and a semiconductor chip (Monolithic Microwave Integrated Circuit: MMIC) 4. The semiconductor chip (MMIC) 4 is a made of a compound (gallium arsenide) of Ga and As.

Further, circuit conductor patterns 10 are provided on a surface of the high-frequency circuit substrate 3. And the circuit conductor patterns 10 provided on the surface of the high-frequency circuit substrate 3 are connected to antenna conductor patterns 7 formed on the patch antenna array substrate (antenna substrate) 2 by means of central conductors 6 passed through through-holes made in the antenna mounting base (base plate) 1.

The high-frequency circuit substrate 3 bonded onto the lower surface of the antenna mounting base (base plate) 1 is integrally formed for transmission and reception. Further, the central conductors 6 are provided in the form of coaxial lines for the purpose of obtaining so-called hermetic sealing, because the performances or characteristics of the Ga, As (gallium arsenide) compound of the semiconductor chip (MMIC) 4 are degraded remarkably in the atmosphere and thus it becomes necessary to secure the air-tightness of the circuit to be isolated from the ambient air.

The antenna mounting base (base plate) 1 is provided with a projection 1-A which surrounds the high-frequency circuit substrate 3. The projection 1-A provided on the antenna mounting base (base plate) 1 is arranged so that, when the cover 5 is fixedly mounted on the projection, the cover 5 and the bottom recess 1-B of the antenna mounting base (base plate) 1 define a space 1-C. The space 1-C is air-tightly sealed with the cover 5. The cover 5, which is made of metal, is joined to the projection 1-A provided on the antenna mounting base (base plate) 1 by laser welding. Further, the cover 5 is provided with a radio wave absorber 8. The radio wave absorber 8 provided to the cover 5 is obtained by press processing and extrusion molding. The high-frequency circuit substrate 3 bonded onto the lower surface of the antenna mounting base (base plate) 1 is integrally formed for transmission and reception portions, the radio wave absorber 8 is highly effective in reducing noise radiated between signal transmission and reception.

An electrical signal as a transmission/reception signal of the high-frequency circuit substrate 3 flows from a lead line 9, passes through a connection part 11, and then flows into an output line 12. In this case, the connection part 11 is also so-called hermetically sealed similarly to the central conductors 6. Since the output line 12 is sealed against a radio wave signal emitted from the patch antenna elements 2-A on the patch antenna array substrate (antenna substrate) 2 and against a radio wave therefrom, the output line is located on each side of the antenna mounting base (base plate) 1 having the patch antenna array substrate (antenna substrate) 2 mounted thereon so as to cover the output line 12 with a cover 13.

When the high-frequency transceiver apparatus 100 is used for an inter-car distance detecting apparatus, recent radio wave regulations obligates the apparatus 100 to use a frequency band of 76 or 77GHz. Assuming that the frequency (76 - 77GHz) has a wavelength λ=v/f (where v being light velocity, f being frequency), then wavelength λ becomes 3.92mm that is a very small value. In this way, since the wavelength λ of the frequency (76 - 77GHz) is as very small as 3.92mm, the flatness accuracy of the patch antenna elements 2-A in the high-frequency transceiver apparatus 100 becomes important from the viewpoint of performance.

In the high-frequency transceiver apparatus 100, a phase at a given point in radial directions of the plural patch antenna elements 2-A connected to the antenna pattern conductors 7 on the upper surface of the patch antenna array substrate (antenna substrate) 2 bonded onto the upper surface of the antenna mounting metallic base (base plate) 1 varies largely with the antenna flatness. A variation in the antenna flatness causes corresponding change of the directivity of an electric field intensity determined by a combination of radiations of the respective patch antenna elements 2-A. Due to the directivity change of the electric field intensity determined by the combination of radiations of the patch antenna elements 2-A, the electric field intensity in a specific direction of the detection ranges of the patch antenna elements 2-A becomes small, the detection distance becomes short, or the electric field intensity in an unwanted direction (for example, in the ground surface direction) becomes strong. This involves generation of noise by wave reflection from the ground surface and reduction of the detection accuracy.

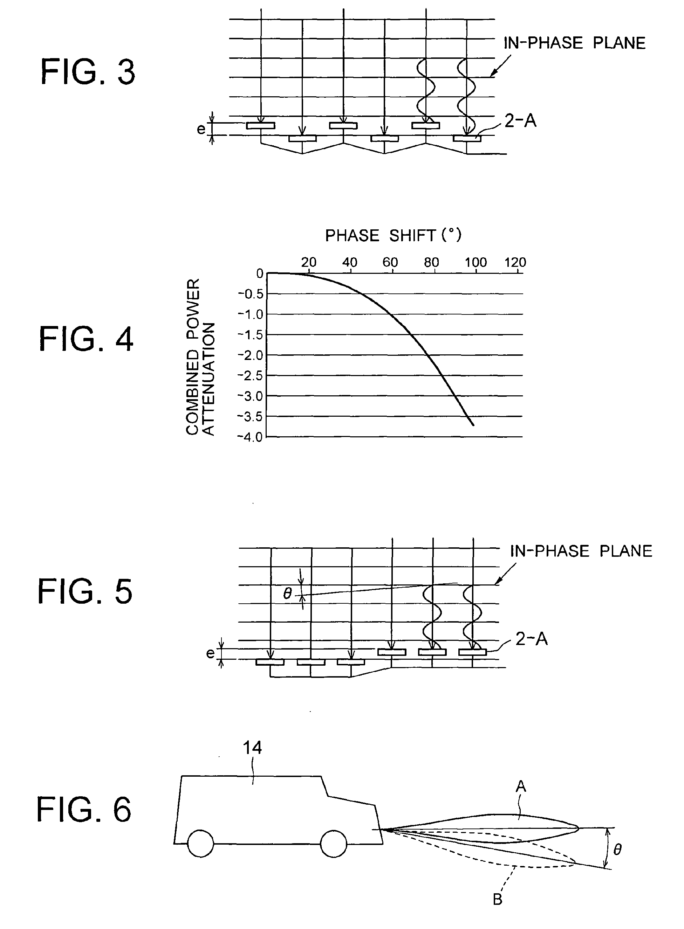

Explanation will now be made in connection with an example where a flatness became bad, e.g., as shown in Fig. 3. In the example of the drawing, a path difference **e** occurs between some (half) of the patch antenna elements 2-A and the other patch antenna elements 2-A. A relationship between the path difference **e** (phase shift) in Fig. 3 and a combined power is shown in Fig. 4. In the drawing, the combined power is attenuated about 1% in an **e** range up to 20° (λ/20), but after the power goes beyond the path difference **e** of 20°, the combined power is attenuated further largely.

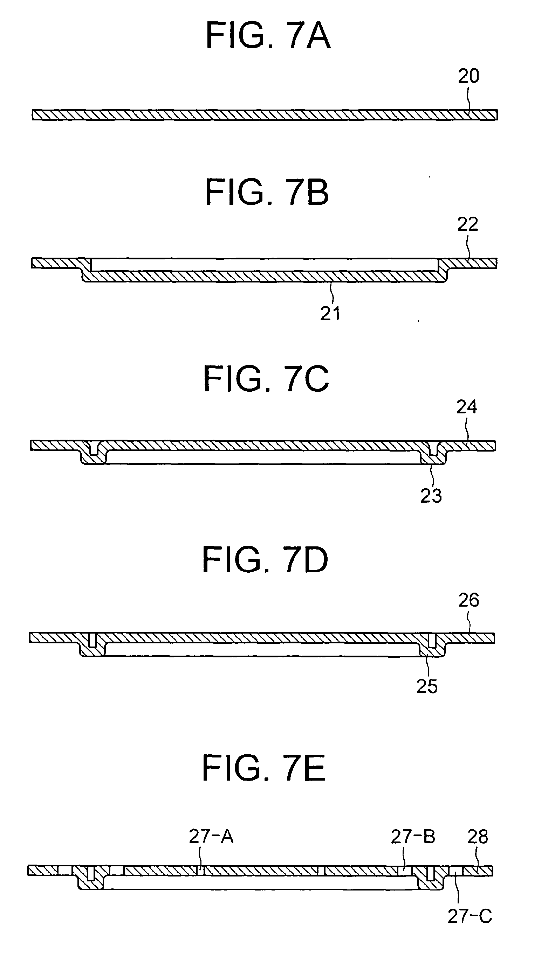

For example, when the flatness became bad as shown in Fig. 5, a direction to be in phase is the maximum radial direction (of directivity of the electric field intensity determined by a combination of radiations of the respective patch antennas, thus producing a directivity shift θ. When the directivity shift θ occurs in a plane of a vehicle 14 having the high-frequency transceiver apparatus mounted therein as shown in Fig. 6, a lobe shape A is changed to a lobe shape B. When such a directivity shift θ as shown in Fig. 6 occurs, the intensity of the reflected signal from the ground surface becomes strong. Thus when the apparatus receives such a reflected signal from the ground surface, the signal becomes a noise component and the detection distance performance is deteriorated, which involves a problem when the apparatus is used for an inter-car distance alarm apparatus, an inter-car distance ACC apparatus or the like. In the present embodiment, when compared with the use of a conventional high-frequency transceiver apparatus associated with information communication, the use of the high-frequency transceiver apparatus in the inter-car distance detecting apparatus enables realization of a high safety reliability and a high performance, which have not been realized so far.

Explanation will then be made how to manufacture the antenna mounting base (base plate) 1 with use of Figs. 7A, 7B, 7C, 7D and 7E.

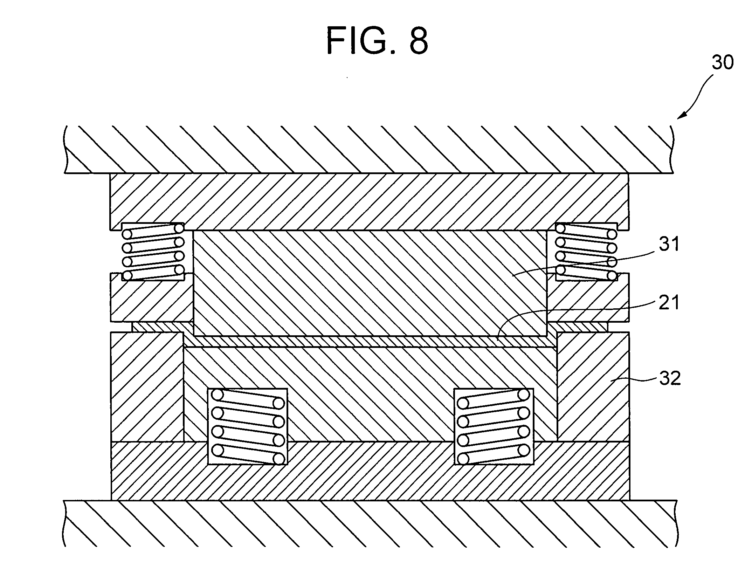

Figs. 7A to 7E show steps of manufacturing the antenna mounting base (base plate) 1. Figs. 8 to 11 show processing steps to obtain the antenna mounting base (base plate) 1 illustrated in Figs. 7A to 7E.

In the present embodiment, for the purpose of obtain secured air-tightness by the hermetic sealing of the central conductors 6, the antenna mounting base (base plate) 1 is made of a Kovar material which has nearly the same as thermal expansion coefficient as glass.

As shown in Fig. 7A, a work shaped in the form of a plate 20 is subjected to first-stage shaping operation by such a press die 30 as shown in Fig. 8. The press die 30 is made up of a lower die part 32 as a fixed side and an upper die part 31 as a driving side. In order to press the work with use of the press die 30, the work 20 is fed onto the fixed lower die part 32 and the driving upper die part 31 is lowered with a predetermined pressure for press shaping of the work. The work 20 is shaped by the press die 30 into such a blank 22 having a shaped part 21 as shown in Fig. 7B.

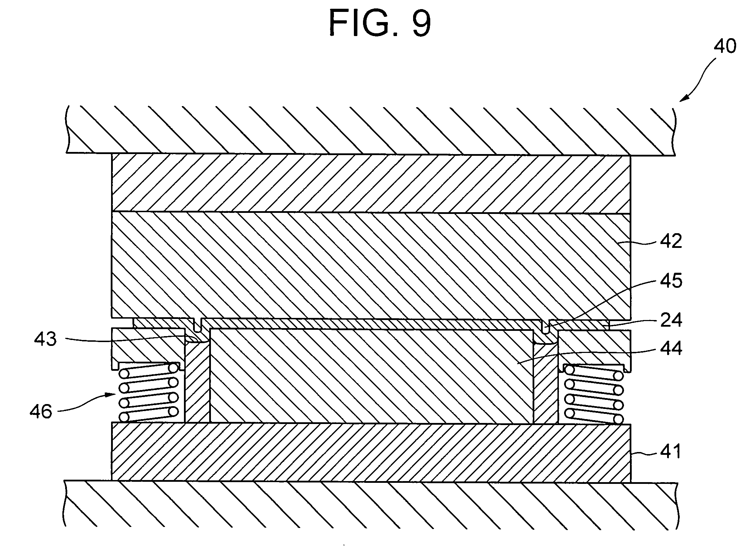

As shown in Fig. 7B, the blank 22 having the shaped part 21 is subjected to second-stage shaping operation by such a press die 40 as shown in Fig. 9. The press die 40, similarly to the press die 30, is made up of a lower die part 41 as a fixed side and an upper die part 42 as a driving side. The lower die part 41 is formed with a recess 44. The upper die part 42 is provided with a projection 45 which fits into the recess 44 of the lower die part 41. Due to the projection 45 of the upper die part 42 and the recess 44 of the lower die part 41, such a shaped product A 24 having a projection 23 as shown in Fig. 7C is made. In such a shaped product A 24 as shown in Fig. 7C, the projection 23 is not shaped with a good accuracy. At this stage, the product is subjected to annealing operation at a temperature of about 1000°C. The annealing is for the purpose of removing the stress of the product caused by the pressing.

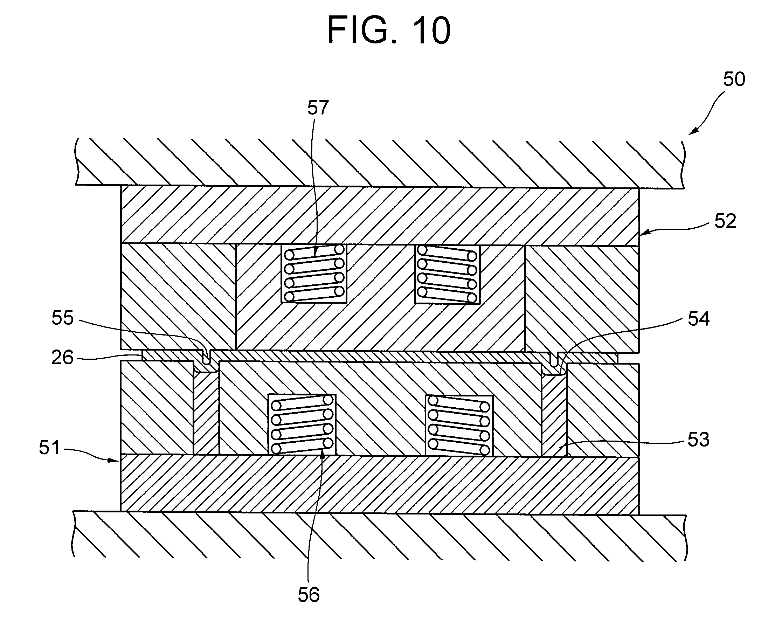

Such a shaped product A 24 having the roughly-shaped projection 23 as shown in Fig. 7C is then subjected to third-stage shaping operation by such a press die 50 as shown in Fig. 10. Like the press die 40, the press die 50 is made up of a lower die part 51 as a fixed side and an upper die part 52 as a driving side. The lower die part 51 includes a die 53 which has a recess 54. The upper die part 52 is provided with a projection 55 which fits into the recess 54 of the lower die part 51. A difference between the press dies 50 and 40 lies in that, in the press die 40, springs 46 for supporting a die 43 of the lower die part 41 are provided outside the die 43, whereas, in the press die 50, springs 56 for supporting the die 53 of the lower die part 51 are provided as biased toward the center of the die 53 and springs 57 are provided at positions corresponding to the installation positions of the springs 56 of the lower die part 51 even in the upper die part 52. In the press die 50, the installation positions of the springs 56 are located differently from the installation positions of the springs 46 of the press die 40. This is for the purpose of providing a good accuracy to the edge of the projection 23 of the shaped product A 24 shown in Fig. 7C.

Due to the projection 55 of the upper die part 52 and the recess 54 of the lower die part 51, the projection 23 of the shaped product A 24 can be locally shaped, and there can be manufactured a shaped product B 26 having a projection 25 with an accurate edge angle as shown in Fig. 7D. Such a shaped product B 26 as shown in Fig. 7D has the accurately shaped projection 25. Upon such pressing operation as shown in Fig. 10, since the product is previously subjected to the annealing operation to remove distortion in the preceding step, a flatness accuracy obtained by the shaping becomes very good. According to the results of our experiments, a product obtained by shaping without the distortion-removal annealing exhibited a flatness of about 400 µm, whereas, a product obtained by shaping with the distortion-removal annealing exhibited a flatness of 100 µm or less.

The projection 25 provided to the shaped product B 26 corresponds to the projection 1-A provided to the antenna mounting base (base plate) 1 so as to surround the high-frequency circuit substrate 3.

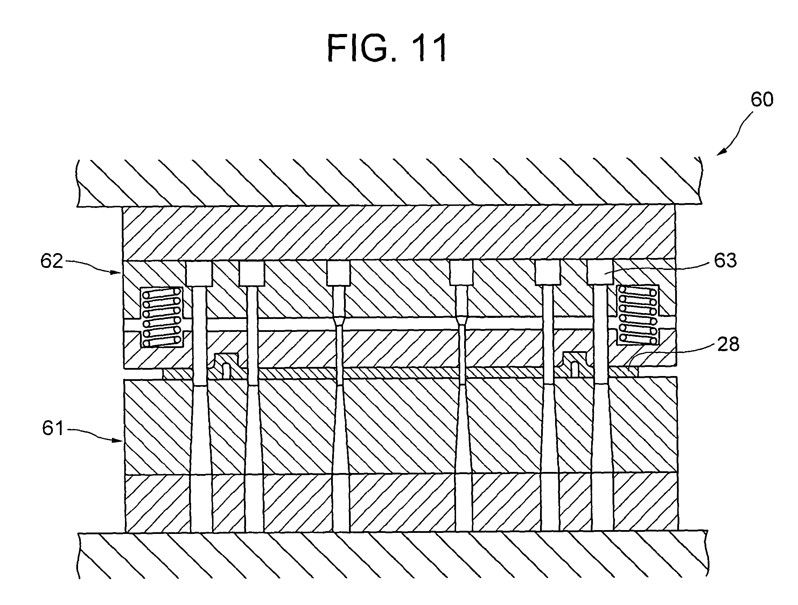

The shaped product B 26 of Fig. 7D having the projection 25 shaped with a good edge angle accuracy is finish-shaped by such a press die 60 as shown in Fig. 11. The press die 60, similarly to the press die 50, is made up of a lower die part 61 as a fixed side and an upper die part 62 as a driving side. However, the press die 60 is different from the press die 50. That is, the press die 60 is not a bending die but a punching die. That is, punches 63, which are provided to the upper die part 62, function to make holes in the shaped product B 26 at predetermined positions.

In this way, holes 27 (27-A, 27-B and 27-C) are made by the punches 63 of the upper die part 62 in the shaped product B 26 of Fig. 7D having the projection 25 with an accurate edge angle, thus completing such a finished product 28 as shown in Fig. 7E. The holes 27 (small-diametered holes 27-A, large-diametered holes 27-B, and rectangular holes 27-C) made in the finished product 28 correspond to through-hole made in the antenna mounting base (base plate) 1. The central conductors 6 are to be hermetically sealed in the respective small-diametered holes 27-A, the connection parts 11 are to be hermetically sealed in the large-diametered holes 27-B, and the rectangular holes 27-C are used for leading out the respective output lines 12 therefrom.

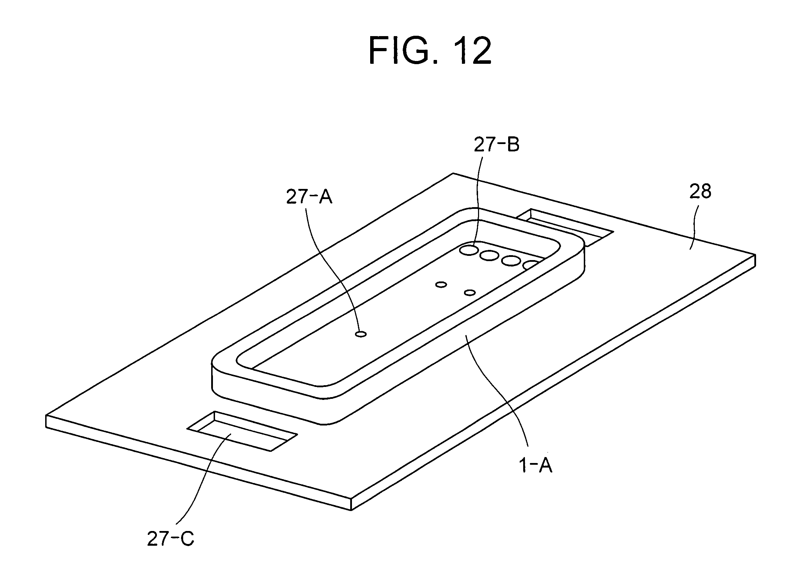

Fig. 12 shows a perspective view of the finished product 28 (antenna mounting base (base plate) 1) manufactured through the shaping steps shown in Figs. 8 to 11 when viewed from its cover 5 mounting side. When the antenna mounting base (base plate) 1 is manufactured through such shaping steps, the base plate 1 can be manufactured with a good productivity, a good accuracy and a low cost. As a result, there can be obtained a high-frequency transceiver apparatus which is low in cost and good in performance.

In accordance with the present embodiment, therefore, since the surface of the patch antenna array substrate 2 is set to have a flatness accuracy of λ/20 (λ : effective wavelength) or less, the inter-car distance detecting performance can be increased.

In accordance with the present embodiment, further, the patch antenna array substrate 2 and the high-frequency circuit substrate 3 are provided as integrally formed on the front and back sides of the antenna mounting base (base plate) 1 for both transmission and reception. As a result, not only characteristic deterioration can be suppressed but also the apparatus can be made small in size.

In accordance with the present embodiment, furthermore, since the cover 5 having a function of absorbing radio waves is provided on the high-frequency circuit side, electromagnetic noise between the transmission and reception can be reduced.

Also in accordance with the present embodiment, the projection 1-A is formed on the side of the antenna mounting base (base plate) 1 having the high-frequency circuit substrate 3 mounted thereon, the cover 5 is joined on the upper face of the projection 1-A, the output lines 12 are led out from the high-frequency circuit onto the patch antenna element 2-A side, passed through the through-holes of the antenna mounting base (base plate) 1, led out onto the high-frequency circuit side, and then air-tightly sealed. As a result, the durability performance of the semiconductor chip (MMIC) 4 can be secured and the apparatus can be manufactured with a low cost.

In accordance with the present embodiment, since the output lines 12 are sealed with the shielding cover against electromagnetism, there can be provided a high-frequency transceiver apparatus which has a good performance with a low cost.

In the embodiment, further, the antenna mounting base (base plate) 1 is manufactured by pressing, the apparatus can be further reduced in cost and realize a stabilized quality.

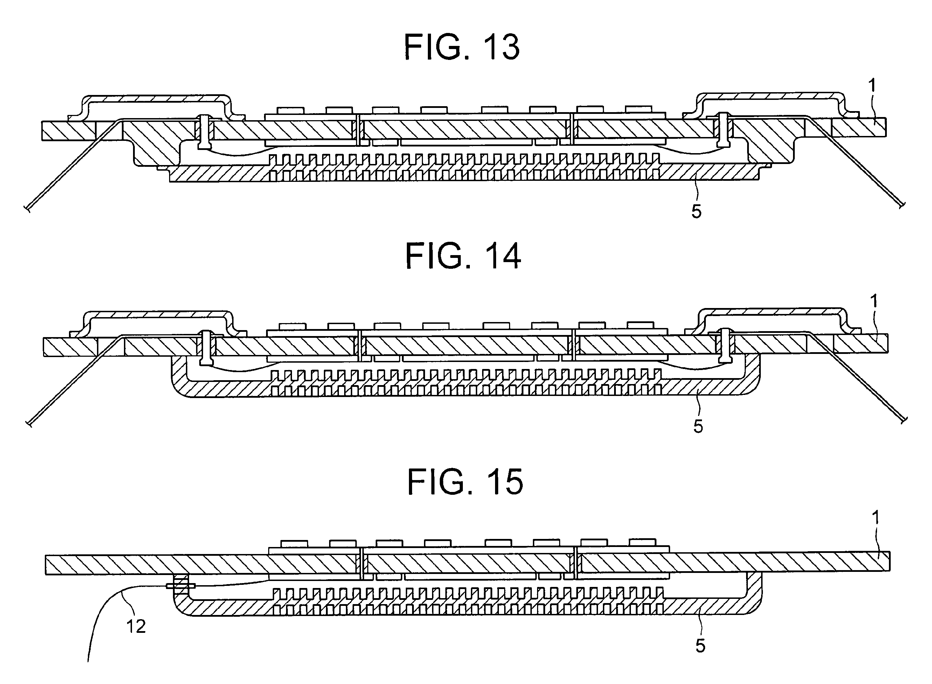

Figs. 13 to 15 show structures of high-frequency transceiver apparatuses in accordance with other embodiment.

In the high-frequency transceiver apparatus shown in Fig. 13, the antenna mounting base (base plate) 1 is manufactured by methods other than the aforementioned method, including machining. When the apparatus is manufactured by machining, the apparatus is smaller in productivity than the apparatus manufactured by the aforementioned pressing, but its processing accuracy is too high to be compared with that by pressing.

In the high-frequency transceiver apparatus of Fig. 14, the cover 5 has a cup shape. With this structure, it becomes unnecessary to provide the projection 1-A to the antenna mounting base (base plate) 1.

Similarly to the high-frequency transceiver apparatus of Fig. 14, in the case of the high-frequency transceiver apparatus of Fig. 15, the cover 5 has a cup shape, and the output line 12 is led out from the side surface of the cover 5.

In accordance with the present invention, when the high-frequency transceiver apparatus is used as a headway distance detecting apparatus (millimeter wave radar), its performance can be increased and its detection distance can be prolonged by securing the flatness accuracy of the patch antenna element. Further, when the antenna mounting base (base plate) is manufactured by pressing, its cost can be lowered and its performance can be enhanced.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A high-frequency transceiver apparatus (100), wherein an antenna substrate (2) made of a dielectric material and having an antenna conductor pattern (7) formed thereon is bonded onto one surface of a base plate (1) to transmit and receive a high frequency wave signal, and the flatness accuracy of a surface of said antenna substrate (2) is set at λ/20 or less when λ denotes effective wavelength.

2. The high-frequency transceiver apparatus (100) as set forth in claim 1, wherein a high-frequency circuit substrate (3) made of a dielectric material and forming a transceiver circuit is provided on the other surface of said base plate.

3. The high-frequency transceiver apparatus as set forth in claim 2, wherein said transceiver circuit includes a circuit conductor pattern formed on the surface of said high-frequency circuit substrate (3) and a semiconductor chip (4) connected to said circuit conductor pattern (10), and said antenna conductor pattern is arranged as connected with a plurality of patch antenna elements (2-A).

4. The high-frequency transceiver apparatus as set forth in claim 2 or 3, wherein said antenna substrate (7) and said high-frequency circuit substrate (3) are integrally formed for transmission and reception.

5. The high-frequency transceiver apparatus as set forth in claim 3 or 4, wherein a cover (5) having a radio wave absorber (8) is mounted on a surface of said base plate having the high-frequency circuit substrate mounted thereon.

6. The high-frequency transceiver apparatus as set forth in claim 5, wherein a projection (1-A) is formed in the other surface of said base plate so as to surround a periphery of the high-frequency circuit substrate (3), and said cover having said radio wave absorber (8) is mounted on an upper face of said projection.

7. The high-frequency transceiver apparatus as set forth in claim 1, 2, 3, 4, 5 or 6, wherein an effective wavelength frequency is any frequency in a range from 76 to 77GHz.

8. The high-frequency transceiver apparatus as set forth in claim 3, 4, 5, 6 or 7, wherein said semiconductor chip (4) is made of a compound of Ga and As, and said high-frequency circuit substrate (3) is air-tightly sealed by joining the cover (5) thereto.

9. The high-frequency transceiver apparatus as set forth in claim 1, 2, 3, 4, 5, 6, 7 or 8, wherein said base plate (1) is formed by press processing.

10. The high-frequency transceiver apparatus as set forth in claim 9, wherein a surface of said base plate (1) onto which said antenna substrate (2) is to be bonded is subjected to annealing operation to remove distortion.

11. The high-frequency transceiver apparatus as set forth in claim 6, wherein said base plate is manufactured by shaping a metallic plate work into a plate having dimensions corresponding nearly to an outer periphery of the projection, shaping said shaped plate into a plate having dimensions corresponding nearly to an inner periphery of said projection inside the projection, annealing said shaped plate to remove distortion, and then shaping the cover mounting face of said projection.

12. A high-frequency transceiver apparatus (100) to be mounted on a car, wherein an antenna substrate (2) having an antenna conductor pattern (7) formed thereon as connected with a plurality of patch antenna elements (2-A) is bonded onto one surface of a base plate (1), a high-frequency circuit substrate (3) including a circuit conductor pattern (10) and a semiconductor chip (4) connected to said circuit conductor pattern is provided on the other surface of said base plate, said antenna substrate (2) and said high-frequency circuit substrate are integrally formed for transmission and reception, a projection (1-A) is formed on the other surface of said base plate so as to surround said high-frequency circuit substrate, a cover (5) having a radio wave absorber (8) is mounted on an upper face of said projection, said high-frequency transceiver apparatus for transmitting and receiving a high frequency wave signal is used for the purpose of detecting a distance between cars, and a flatness accuracy of a surface of said antenna substrate of the high-frequency transceiver apparatus is set at λ/20 or less when λ denotes effective wavelength, and an effective frequency of the high-frequency transceiver apparatus is set at any frequency in a range from 76 to 77GHz.

13. The high-frequency transceiver apparatus as set forth in claim 12, wherein said base plate is formed by press processing.

14. The high-frequency transceiver apparatus as set forth in claim 12 or 14, wherein said base plate is manufactured by shaping a metallic plate work into a plate having dimensions corresponding nearly to an outer periphery of the projection, shaping said shaped plate into a plate having dimensions corresponding nearly to an inner periphery of said projection inside the projection, annealing said shaped plate to remove distortion, and then shaping the cover mounting face of said projection.
